# FASCICULE DE BREVET EUROPEEN

(11) **EP 3 946 884 B1**
(45) Date de publication et mention de la délivrance du brevet: **20.12.2023**
(21) Numéro de dépôt: 20713047.7
(22) Date de dépôt: 27.03.2020
(51) Int. Cl.: B29C 48/08, B29C 48/18, B65D 65/46, B32B 27/36, B29K 105/00, B29C 48/00, B29C 48/21, B32B 9/04, B32B 27/30, B32B 27/18, B32B 9/02, B32B 23/08, B32B 27/08

(54) **ARTICLE MULTICOUCHE COMPRENANT DES ENZYMES**
ENZYME ENTHALTENDER MEHRSCHICHTARTIKEL
MULTILAYER ARTICLE COMPRISING ENZYMES

(30) Priorité: 28.03.2019 FR 1903237
(43) Date de publication de la demande: 09.02.2022
(73) Titulaire: Carbiolice, 63100 Clermont-Ferrand (FR)
(72) Inventeur: ARNAULT, Clémentine, 63100 CLERMONT FERRAND (FR)
(74) Mandataire: Icosa
(86) Numéro de dépôt international: PCT/EP2020/058796
(87) Numéro de publication internationale: WO 2020/193770

(56) Documents cités:
- EP-A1- 2 583 820
- WO-A1-2018/233888
- WO-A1-2019/043134

## Description

### DOMAINE DE L'INVENTION

La présente invention concerne un article de matière plastique multicouche biodégradable comprenant au moins 3 couches et une âme qui contient des enzymes capables de dégrader les polymères des couches qui l'encadrent.

### ETAT DE LA TECHNIQUE

On connaît des articles biosourcés et biodégradables, notamment des articles monocouches ou multicouches, employés en particulier pour la fabrication de sacs de matière plastique. Ces sacs sont notamment employés pour l'emballage de produits alimentaires, en particulier les fruits et légumes.

On citera notamment les articles décrits dans les brevets et demandes de brevets WO 2007/118828, WO 2002/059202A1, WO 2002/059199, WO 2002/059198, WO 2004/052646, WO 2018/233888, US 6,841,597, US 8,751,816, US 5,436,078, US 9,096,758, US 2009/324917, EP 2583820 et CN 106881929.

Pour la réalisation d'un article comprenant des enzymes capables de dégrader les polymères qui le constituent, il faut à la fois préserver les enzymes au cours de la préparation des articles, par exemple par des mélanges avec des polymères qui fondent à des températures qui ne viennent pas dégrader lesdites enzymes, tout en respectant des contraintes de propriétés mécaniques et de barrières, notamment aux gaz.

### EXPOSE DE L'INVENTION

L'invention concerne un article de matière plastique biosourcée et biodégradable multicouche comprenant au moins 3 couches dont une âme qui contient des enzymes capables de dégrader les polymères des couches qui l'encadrent.

L'article selon l'invention est un article multicouche de type ABA, ABCA ou ACBCA, comprenant une couche centrale B laquelle comprend au moins 0,001 % d'enzymes capables de dégrader les polymères des couches adjacentes A et éventuellement C, les pourcentages étant exprimés en masse par rapport à la masse totale de la composition de la couche B.

L'article multicouche selon l'invention peut concerner soit un article souple comme un film, un sac, un film de routage, un film de paillage.

L'article souple de cette invention aura préférentiellement une épaisseur inférieure à 250µm.

L'article multicouche selon l'invention peut également concerner un article rigide tel qu'un gobelet, une assiette, une capsule de boisson, une barquette, un blister d'emballage.

L'article rigide de cette invention aura une épaisseur comprise entre 150µm et 5mm, préférentiellement comprise entre 150µm et 3mm.

### DESCRIPTION DETAILLEE DE L'INVENTION

L'article selon l'invention est un article thermoplastique multicouches de type ABA, ABCA ou ACBCA. La couche centrale B est celle qui comprend les enzymes capables de dégrader les polymères des couches A, B et le cas échéant C.

Par article thermoplastique multicouches de type ABA, ABCA ou ACBCA, on entend selon l'invention un article dont les couches sont liées entre elles et pas simplement associées par simple juxtaposition. En particulier et de préférence, les couches sont liées par coextrusion.

Sauf indication contraire, les pourcentages et rapports relatifs sont exprimés en masse par rapport à la masse totale de la composition qu'ils viennent définir.

La couche A est avantageusement une couche de polyesters biodégradables employés seuls ou en mélange en toutes proportions. Ces polyesters sont bien connus de l'homme du métier, notamment choisis parmi le PBAT (polybutylene adipate terephthalate), le PHA (polyhydroxyalkanoate), le PHB (Poly-β-hydroxybutyrate), le PHH (Polyhydroxyhexanoate), le PBS (polybutylène succinate), le PLA (acide polylactique), le PCL (polycaprolactone), le PBSA (polybutylène succinate adipate) et l'amidon plastifié

Selon un mode particulier de réalisation, le polyester de la couche A est choisi parmi le PBAT, le PLA et leurs mélanges en toutes proportions. Selon un mode préféré, le rapport pondéral PBAT/PLA dans la couche A va de 0/100 à 25/75, préférentiellement de 10/90 à 20/80, encore plus préférentiellement de 13/87 à 15/85.

La couche A peut également comprendre d'autres additifs usuels dans la préparation des articles plastiques, comme des agents glissants, des plastifiants, des agents nucléants, des compatibilisants, des aides à la fabrication, des stabilisants aux rayonnements UV, des agents anti choc, des charges minérales ou végétales, etc.

Les plastifiants utilisés dans l'article souple sont bien connus de l'homme du métier, en particulier choisis parmi les polyols et les amides, les oligomères d'acide lactique (OLAs) et les esters de citrate.

Les OLAs sont des plastifiants connus de l'homme du métier, en particulier comme matériaux biosourcés. Il s'agit d'oligomères d'acide lactique de poids moléculaire inférieur à 1500 g/mol. Ils sont de préférence des esters d'oligomères d'acides lactiques, leur terminaison acide carboxylique étant bloquée par estérification avec un alcool, en particulier un alcool linéaire ou ramifié en C1-C10, avantageusement un alcool en C6-C10, ou un mélange de ces derniers. On citera notamment les OLAs décrits dans la demande de brevet EP 2 256 149 avec leur mode de préparation, et les OLAs commercialisés par la société Condensia Quimica sous la marque Glyplast^{®}, en particulier les références Glyplast^{®} OLA 2, qui a un poids moléculaire de 500 à 600 g/mol et Glyplast^{®} OLA 8 qui a un poids moléculaire de 1000 à 1100 g/mol. Selon un mode préféré de réalisation de l'invention, les OLAs ont un poids moléculaire d'au moins 900 g/mol, de préférence de 1000 à 1400 g/mol, plus préférentiellement de 1000 à 1100 g/mol.

Les esters de citrate sont également des plastifiants connus de l'homme du métier, en particulier comme matériaux biosourcés. On citera notamment le triéthyl citrate (TEC), le triéthyl acétyl citrate (TEAC), le tributyl citrate (TBC), le tributyl acétyl citrate (TBAC), de préférence le TBAC.

La teneur en plastifiant, en particulier OLAs ou esters de citrate dans la composition selon l'invention est avantageusement d'au moins 0,5 %, de préférence de 1 à 5%, plus préférentiellement de 2 à 4%, avantageusement d'environ 3%.

Les compatibilisants sont particulièrement employés dans la composition de la couche A lorsque l'on mélange du PLA avec un autre polyester. Les compatibilisants PLA/Polyesters sont bien connus de l'homme du métier, notamment les molécules présentant les fonctions époxy, acrylate, anhydride, oxazoline et lactame qui permettent des réactions de greffage.

Parmi les compatibilisants on citera plus particulièrement les polyacrylates, les terpolymères d'éthylène, d'ester acrylique et de méthacrylate de glycidyle (par exemple commercialisé sous la marque Lotader^{®} par la société Arkema), les copolymères triblocs PLA-PBAT-PLA, les PLA greffés d'anhydride maléique (PLA-g-AM) ou les PBAT greffés d'anhydride maléique (PBAT-g-AM).

Selon un mode préféré de réalisation de l'invention, le compatibilisant est choisi parmi les polyacrylates, avantageusement sélectionné parmi les dérivés de méthacrylate, préférentiellement le compatibilisant est du poly(éthylène-co-méthyl acrylate-co-glycidyl méthacrylate). De tels compatibilisants sont bien connus et décrits notamment par Dong & al. (International Journal of Molecular Sciences, 2013, 14, 20189-20203) et Ojijo & al. (Polymer 2015, 80, 1-17). Un compatibilisant préféré est le poly(éthylène-co-méthyl acrylate-co-glycidyl méthacrylate) commercialisé sous la dénomination JONCRYL^{®} ADR-4468- par la société BASF.

La teneur en compatibilisant dans la composition de la couche A selon l'invention est avantageusement d'au moins 0,1%, de préférence de 0,25 à 2%, plus préférentiellement de 0,3 à 1,5%, avantageusement d'environ 0.5% en poids par rapport au poids total de la composition.

Les charges minérales préférentiellement utilisées seront le carbonate de calcium ou le talc.

Les charges végétales préférentiellement utilisées seront l'amidon et les fibres et farine de bois.

Selon un mode particulier de réalisation de l'invention, en particulier pour la préparation d'articles souples, la composition de la couche A comprend
- au moins 25% en poids de PLA (acide polylactique), préférentiellement au moins 28%, plus préférentiellement au moins 30 % de PLA,
- au moins 60 % en poids d'un polyester choisi parmi le PBAT (polybutylène adipate téréphthalate), les PHAs (polyhydroxyalkanoates), le PBS (polybutylène succinate), le PBSA (polybutylène succinate adipate) et leurs mélanges
- entre 0,25 à 1% d'un compatibilisant PLA/Polyester, en particulier choisi parmi les polyacrylates définis plus haut, et
- entre 2 à 4% d'un plastifiant, en particulier choisi parmi les oligomères d'acide lactique (OLAs) et les esters de citrate définis plus haut.

Selon un autre mode particulier de réalisation de l'invention, en particulier pour des articles rigides, la composition de la couche A comprend
- Au moins 80% en poids de polyester, préférentiellement au moins 85%, plus préférentiellement au moins 90%
- Au plus 30% d'additifs, préférentiellement au plus 15%, plus préférentiellement au plus 10%.

En particulier la couche A est constituée essentiellement d'un polyester ou un mélange de polyesters tels que décrits plus haut, en particulier de PLA.

La couche centrale B comprend au moins 0,001% d'enzyme capable de dégrader les polymères des couches A et B, qu'elles soient adjacentes ou séparées par une couche C.

Les enzymes capables de dégrader des polymères sont bien connues de l'homme du métier. On citera en particulier des enzymes capables de dégrader les polyesters de manière à améliorer la biodégradabilité de l'article selon l'invention. Dans un mode particulier de l'invention les enzymes sont capables de dégrader le PLA. De telles enzymes et leur mode d'incorporation dans les articles thermoplastiques sont connus de l'homme du métier, notamment décrits dans les demandes de brevets WO 2013/093355, WO 2016/198652, WO 2016/198650, WO 2016/146540 et WO 2016/062695. Préférentiellement ces enzymes sont choisies parmi des protéases et sérines protéases. Dans un mode particulier, les sérines protéases sont choisies parmi la Proteinase K de *Tritirachium album,* ou les enzymes dégradant le PLA issues *d'Amycolatopsis sp., Actinomadura keratinilytica, Laceyella sacchari LP175, Thermus sp.,* ou Bacillus licheniformis ou d'enzymes commerciales reformulées et connues pour dégrader le PLA telles que Savinase^{®}, Esperase^{®}, Everlase^{®} ou n'importe quelle enzyme de la famille des subtilisines CAS 9014-01-1 ou tout variant fonctionnel.

L'homme du métier adaptera la teneur en enzymes dans la couche centrale B en fonction de ses objectifs de dégradation des polyesters des couches B et A qui l'encadrent. De manière avantageuse, la teneur en enzyme dans la couche centrale sera au moins de 0,002%, plus avantageusement d'au moins 0,05%. Ces teneurs peuvent aller jusqu'à 10%, voire plus. Bien qu'il soit possible de formuler des compositions pour la couche B comprenant plus de 10% d'enzymes, il est néanmoins rare que l'on dépasse de telles teneurs pour les usages les plus fréquents des articles en matière plastique selon l'invention. De manière avantageuse, la teneur en enzymes dans la composition de la couche B est de 0,01 à 7%, de préférence de 0,02 à 5%.

La couche B comprend outre les enzymes, des polymères constitutifs de cette couche. Selon un mode préféré de réalisation de l'invention, ces polymères constitutifs sont choisis parmi les polymères susceptibles d'être dégradés par les enzymes qu'ils contiennent, en particulier les polyesters définis plus haut pour la couche A. Ces polymères constitutifs peuvent aussi être choisis parmi des matériaux barrière comme le PVOH (alcool polyvinylique), le PVCD (polychlorure de vinyle), le PGA (acide polyglycolique), la cellulose et ses dérivés, les protéines de lait, ou des polysaccharides et leurs mélanges, employés seuls ou en mélanges avec les polyesters précités.

Comme pour la couche A, les polyesters sont en particulier choisis parmi les polyesters biodégradables et leurs copolymères, en particulier le PBAT (polybutylene adipate terephthalate), le PHA (polyhydroxyalkanoate), le PHB (Poly-β-hydroxybutyrate), le PHH (Polyhydroxyhexanoate), le PBS (polybutylene succinate), le PLA (acide polylactique), le PCL (polycaprolactone), le PBSA (polybutylène succinate adipate) et l'amidon plastifié et leurs mélanges en toutes proportions.

Selon un mode particulier de réalisation de l'invention, les polymères constitutifs de la couche B selon l'invention ont une température de fusion inférieure à celle des polymères constitutifs de la couche A.

Les enzymes peuvent être ajoutés directement aux polymères de la couche B lors de sa préparation, ou encore sous forme d'un prémélange concentré dans un polymère support à bas point de fusion. De telles compositions sont notamment décrites dans la demande WO 2019/043134. Elles comprennent avantageusement un polymère support ayant une température de fusion inférieure à 140°C et/ou une température de transition vitreuse inférieure à 70°C et un polysaccharide.

Les polymères ayant une température de fusion inférieure à 140°C et/ou une température de transition vitreuse inférieure à 70°C sont bien connus de l'homme du métier. Il s'agit en particulier de polycaprolactone (PCL), poly butylene succinate adipate (PBSA), polybutylene adipate terephthalate (PBAT), polyhdroxyalkanoate (PHA), d'acide polylactique (PLA), ou de leurs copolymères. Il peut aussi s'agir d'un polymère naturel comme l'amidon ou encore un polymère que l'on qualifiera d'universel, c'est à dire compatible avec une large gamme de polymères comme un copolymère de type EVA. De manière avantageuse, le polymère support a une température de fusion inférieure à 120°C et/ou une température de transition vitreuse inférieure à 30°C.

Les polysaccharides sont notamment choisis parmi les dérivés d'amidon comme l'amylose, l'amylopectine, les maltodextrines, le sirop de glucose, les dextrines et les cyclodextrines, les gommes naturelles comme la gomme arabique, la gomme tragacanthe, la gomme de guar, la gomme locust beam, la gomme de karaya, la gomme de mesquite, les galactomannanes, la pectine ou les polysaccharides solubles de soja, les extraits marins comme les carraghénanes et les alginates, et des polysaccharides microbiens ou animaux comme les gellanes, les dextranes, les xanthanes ou le chitosan, et leurs mélanges. Un polysaccharide préféré est la gomme arabique.

Une composition enzymatique préférée comprend en particulier, de 50 à 95 % d'un polymère de bas point de fusion, en particulier du polycaprolactone (PCL), préférentiellement de 70 à 90 %, de 0,001 à 10% d'enzymes, préférentiellement de 1 à 6%, et de 1 à 30% de gomme arabique, préférentiellement de 10 à 25%.

Selon un mode particulier de réalisation de l'invention, la couche B est constituée essentiellement de la composition enzymatique ci-dessus (le polymère support est également le polymère constitutif). La composition peut être complémentée par des additifs usuels décrits plus bas.

Selon un autre mode de réalisation de l'invention, la composition enzymatique est ajoutée au(x) polymère(s) constitutif(s) précédemment décrits selon les méthodes usuelles, en quantités suffisantes pour apporter la quantité d'enzymes recherchée pour la couche B. La teneur en composition enzymatique dans la couche B dépendra notamment de la teneur en enzymes dans la composition enzymatique, avantageusement de 1 à 10% par rapport au poids total de la composition de la couche B.

Selon un mode particulier de réalisation, la couche B comprend outre les polymères qui la constituent et les enzymes, un polymère support et un polysaccharide tels que définis plus haut.

Selon un mode particulier de réalisation de l'invention, la couche B comprend
- de 80 à 99% de polymère constitutif, de préférence de 90 à 99%
- de 0 à 40% de polysaccharide, de préférence de 0,1 à 4 %
- de 0 à 40% d'un polymère support, de préférence de 3 à 6% et
- de 0,005 à 10 % d'enzymes, de préférence de 0,01 à 5%, plus préférentiellement de 0.01 à 3%.

Selon un mode plus particulier de réalisation de l'invention, la teneur en enzyme dans la composition de la couche B ci-dessus va de 0,02 à 1%.

La composition de la couche B peut également comprendre des additifs usuels, comme pour la composition de la couche A. En particulier, lorsque le polymère constitutif comprendra un mélange de PLA et d'un autre polyester, la composition comprendra avantageusement un compatibilisant et un plastifiant, comme définis précédemment.

Selon un mode particulier de réalisation d'un article souple de l'invention, la composition de la couche B comprend
- au moins 20% de PLA, avantageusement au moins 25% de PLA
- au moins 40% de PBAT
- au moins 0,08% de compatibilisant PLA/PBAT tel que défini plus haut, avantageusement au moins 0,5 %
- au moins 0,4 % de plastifiant , en particulier choisi parmi les OLAs et les esters de citrate décrits plus haut,
- au moins 0,002 % d'enzyme, avantageusement au moins 0,05%,
- au moins 1,4% d'un polymère support tel que décrit plus haut, avantageusement au moins 1,5%, et
- un polysaccharide le cas échéant.

Selon un mode particulier de réalisation d'un article rigide de l'invention, la composition de la couche B comprend
- au moins 90% de PLA, avantageusement au moins 95% de PLA
- au moins 0,002 % d'enzyme, avantageusement au moins 0,05%,
- au moins 1,4% d'un polymère support tel que décrit plus haut, avantageusement au moins 1,5%, et
- un polysaccharide le cas échéant.

Selon un autre mode particulier de réalisation d'un article rigide de l'invention, la composition de la couche B comprend
- au moins 40% de PLA, avantageusement au moins 50% de PLA
- au moins 15% de PBAT, avantageusement au moins 20% de PBAT
- au moins 5% d'une charge minérale, avantageusement au moins 10% d'une charge minérale
- au moins 0,002 % d'enzyme, avantageusement au moins 0,05%,
- au moins 1,4% d'un polymère support tel que décrit plus haut, avantageusement au moins 1,5%, et
- un polysaccharide le cas échéant.

Selon certains modes de réalisation de l'invention, l'article multicouche peut comprendre une ou deux couches C entre la couche A externe de polyesters et la couche B qui comprend les enzymes (ABCA ou ACBCA). Ces couches C sont là pour apporter des propriétés particulières aux articles selon l'invention, plus particulièrement pour apporter des propriétés barrière aux gaz et notamment à l'oxygène.

De tels matériaux barrières sont bien connus de l'homme du métier, et notamment le PVOH (alcool polyvinylique), le PVCD (polychlorure de vinyle), le PGA (acide polyglycolique), la cellulose et ses dérivés, les protéines de lait, ou des polysaccharides et leurs mélanges en toutes proportions, cités plus haut pour ceux pouvant également entrer dans la composition de la couche B.

Le PVOH employé comme matériau barrière dans la préparation de l'article est bien connu. Il s'agit de polyvinyle alcool dont le degré de polymérisation est compris entre 300 et 2500. Son point de fusion est inférieur à 210°C et sa viscosité est comprise entre 3 et 60 mPa.s.

Le PVCD employé comme matériau barrière dans la préparation de l'article est bien connu. Il s'agit de polyvinylidène chloride issu de la copolymérisation du vinylidene chloride (85%) et du vinyl chloride (15%).

Le PGA employé comme matériau barrière dans la préparation de l'article est bien connu. Il s'agit de d'acide polyglycolique dont la température de fusion est de 220°C et la température de transition vitreuse est de 40°C.

Parmi les celluloses, on citera plus particulièrement les celluloses microfibrilles (MFC) et l'acétate de cellulose.

Les MFC utilisées comme matériau barrière ont un diamètre compris entre 4 et 10006nm et une densité comprise entre 0.51 et 1.57 g/cm³.

Parmi les protéines de lait employées comme matériaux barrière, on citera plus particulièrement la caséine, la β-lactoglobuline et l'α-lactalbumine ainsi que les immunoglobulines, la sérum albumine, la lactoferrine et des enzymes dont la plasmine.

Les polysaccharides employés comme matériaux barrière sont également bien connus de l'homme du métier on citera plus particulièrement les galactomannanes, la pectine ou les polysaccharides solubles de soja, les extraits marins comme les carraghénanes et les alginates, et des polysaccharides microbiens ou animaux comme les gellanes, les dextranes, les xanthanes, les xylanes ou le chitosan, et leurs mélanges.

Comme pour les couches A ou B, la couche C peut également comprendre des additifs usuels dans la préparation des articles plastiques, comme des agents glissants, des plastifiants, des agents nucléants, des compatibilisants, des aides à la fabrication, des stabilisants aux rayonnements UV, des agents anti choc, des charges minérales ou végétales, etc.

Selon un mode préféré de réalisation de l'invention, la composition de la couche C est la suivante
- 90 à 100% de matériaux barrière tels que définis précédemment, et
- 0 à 10% d'additifs.

De préférence la couche C comprend plus de 95% de matériau barrière, encore plus préférentiellement 99% ou plus.

Le PVOH est un matériau barrière préféré pour les couches C des articles selon l'invention.

L'article souple multicouche selon l'invention a avantageusement une épaisseur inférieure à 250µm, préférentiellement inférieure à 100µm, 50µm, 40µm ou 30µm. Selon un mode préféré de réalisation de l'invention, l'épaisseur de l'article multicouche va de 10 à 20µm.

L'article rigide multicouche selon l'invention a avantageusement une épaisseur supérieure à 150µm, préférentiellement inférieure à 5000µm. Selon un mode préféré de réalisation de l'invention, l'épaisseur de l'article multicouche va de 150 à 3000µm.

L'épaisseur relative de chaque couche de l'article ABA, ABCA ou ACBCA selon l'invention peut varier selon les propriétés finales recherchées pour l'article, notamment en termes de résistance mais aussi de biodégradabilité.

Avantageusement, chaque couche A représente indépendamment de 5 à 30% de l'épaisseur totale de l'article et la couche centrale B représente de 40 à 90% de l'épaisseur totale de l'article. De préférence, la couche centrale B représente de 50 à 90 % de l'épaisseur totale de l'article.

Dans un mode préféré de réalisation de l'article souple de l'invention, les deux couches A ont une épaisseur identique, chacune représentant de 15 à 30 % de l'épaisseur totale de l'article, préférentiellement de 16 à 25%.

Dans un mode préféré de réalisation de l'article rigide de l'invention, les deux couches A ont une épaisseur identique, chacune représentant de 2 à 20 % de l'épaisseur totale de l'article, préférentiellement de 3 à 15%.

Les couches C lorsque présentes, ont généralement une épaisseur inférieure à 15 µm. Elles représentent individuellement moins de 10% de l'épaisseur totale de l'article.

Selon un mode particulier de réalisation de l'invention, les couches C, lorsque présentes, des articles souples multicouches ont une épaisseur inférieure à 3µm. Elles représentent individuellement moins de 30% de l'article.

Selon un mode particulier de réalisation de l'invention, les couches C, lorsque présentes, des articles rigides multicouches ont une épaisseur inférieure à 20µm. Elles représentent individuellement moins de 30% de l'article.

Les compositions des couches A, B et C sont préparées par les techniques usuelles de préparation de compositions de polymères.

L'homme du métier saura préparer l'article multicouche selon l'invention, par toutes techniques usuelles qui permettent leur liaison, comme la coextrusion, le calandrage, l'injection, le laminage, en particulier par extrusion. De préférence, l'article est préparé par coextrusion des couches, l'homme du métier étant à même de déterminer les conditions de mise en oeuvre du procédé, et notamment le mélange des composants entrant dans la composition de chacune des couches. Avantageusement, la coextrusion est réalisée à une température au-dessous de 200°C.

L'article selon l'invention pourra être employé pour tous usages usuels des articles thermoplastiques, et notamment pour la préparation d'emballages ou de sacs, ou encore pour le paillage ou le routage. Il peut aussi être employé pour la préparation de vaisselle jetable (assiettes, verres), d'emballages (barquettes, blisters) ou de capsules de boisson.

Avantageusement, le taux de matériau biosourcé pour réaliser l'article selon l'invention est supérieur à 30%, préférentiellement supérieur à 40%.

### EXEMPLES

### Matériel et Méthodes

### I. Préparation de granulés de mélange de PBAT et de PLA

Les granulés ont été produits sur bi-vis co-rotative Clextral Evolum 25 HT. Pour introduire les polymères (PLA et PBAT) et le compatibilisant deux doseurs gravimétriques ont été utilisés et pour doser le TBAC liquide, une pompe PCM a été utilisée.

Le mélange PLA et Joncryl^{®} a été introduit via un doseur en début de vis en présence du plastifiant TBAC. Le mélange est fondu et amené dans la zone d'introduction du PBAT.

Les granulés ont été préparés avec une vitesse de vis de 450 tpm et à un débit de 40 kg/h.

Les paramètres utilisés pour l'extrusion des granulés sont présentés dans le tableau [1].

**Tableau 1 : Profil de température (°C) utilisé pour l'extrusion des granulés**

| Zone | Z1 | Z2 | Z3 | Z4 | Z5 | Z6 | Z7 | Z8 | Z9 | Z10 | Z11 |
|---|---|---|---|---|---|---|---|---|---|---|---|
| Température | 50 | 195 | 195 | 195 | 195 | 195 | 195 | 195 | 195 | 195 | 195 |

Le mélange des composants arrive à l'état fondu dans la vis en Z11 et est immédiatement granulé avec un système de coupe sous eau pour obtenir des granulés en demi-lune de diamètre inférieur à 3 mm.

On prépare une composition à l'état de la technique comprenant 35% de PLA et 61% de PBAT,3% de TBAC et 1% de Joncryl^{®} ADR 4468 C (% en poids par rapport au poids total de la composition).

### II. Préparation d'un mix de polymère support et d'enzyme

Le mix de polymère support et d'enzyme est préparé à partir de granulés de polycaprolactone (PCL) et l'enzyme sous forme liquide comme décrite dans la demande WO 2019/043134.

Le mix de polymère support et d'enzyme a été fabriqué avec une extrudeuse bi-vis CLEXTRAL EV25HT comprenant 11 zones pour lesquelles la température est indépendamment contrôlée et régulée. Le PCL est introduit en zone 1 à 16kg/h et la solution d'enzyme en zone 5 à 4kg/h à l'aide d'une pompe péristaltique. Les zones sont chauffées selon le tableau [2]. 20% de la solution d'enzyme est introduite au PCL (% en poids par rapport au poids total).

**Tableau 2 : Profil de température (°C) utilisé pour le mix polymère support et enzyme**

| Zone | Z1 | Z2 | Z3 | Z4 | Z5 | Z6 | Z7 | Z8 | Z9 | Z10 | Z11 |
|---|---|---|---|---|---|---|---|---|---|---|---|
| Température | 40 | 65 | 75 | 75 | 60 | 60 | 60 | 60 | 60 | 60 | 60 |

### III. Produits commerciaux

Dans ces exemples, du PLA commercialisé sous la référence Ingeo^{™} Biopolymer 4043D par la société NatureWorks et sous la référence Luminy^{®} LX175 commercialisé par la société Total Corbion, du PCL commercialisé sous la référence Capa^{™} 6500 par la société Perstorp, du Joncryl^{®} ADR 4468 commercialisé par la société BASF, du TBAC Citrofol^{®} BII commercialisé par la société Jungbunzlauer, du PBAT commercialisé sous la référence A400 par la société Wango, des compounds biodégradables commercialisés sous la référence Mater-Bi par la société Novamont et sous la référence Biolice.Bags 6040T par la société Carbiolice.

### IV. Production des films

Pour la préparation de films multicouches on emploie une ligne de coextrusion gonflage tricouche Eurexma, laize 275 - 300 mm et vis de L/D = 30. Le taux de gonflage était d'environ 3,5 - 3,9. Les réglages et les températures sont détaillés dans les tableaux [3] et [4].

**Tableau 3 : Paramètres de température (°C) de l'extrudeuse et de la filière**

| | Extrudeuse | | | | Filière | | |
|---|---|---|---|---|---|---|---|
| | Z1 | Z2 | Z3 | Z4 | Z1 | Z2 | FIL |
| A intérieure | 165 - 130 | 165 - 135 | 165 - 135 | 170 - 140 | 160 - 145 | 155 - 145 | 150 - 145 |
| B centrale | 155 - 150 | 155 - 150 | 160 - 150 | 160 - 150 | | | |
| A extérieure | 165 - 130 | 165 - 135 | 165 - 135 | 170 - 140 | | | |

**Tableau 4 : Paramètres de procédé de l'extrudeuse**

| | Vis A (interne) | Vis B (centre) | Vis A (externe) |
|---|---|---|---|
| Répartition couches % | 20 | 60 | 20 |
| Vitesse vis (RPM) | 25 - 11 | 80 - 35 | 25 - 11 |

### V. Production de feuilles rigides

Pour la préparation des feuilles rigides on emploie une ligne de coextrusion calandrage tricouche. Une extrudeuse FAIREX diamètre 45 est utilisée pour la couche B ; une extrudeuse SCAMEX diamètre 30 et Davis standard diamètre 30 pour les couches A. La filière plate utilisée est de 220 mm et est équipée d'une lèvre réglable d'ouverture nominale 1,5 mm et d'un boitier de co-extrusion en ABA. Les réglages et températures sont détaillés dans le tableau 5.

**Tableau 5 : Paramètres de température (°C) de l'extrudeuse, de la filière et de la ligne de calandrage**

| | Extrudeuse | | | | Filière | | | | Calandre |
|---|---|---|---|---|---|---|---|---|---|
| | Z1 | Z2 | Z3 | Z4 | Boitier répartition | Z1 | Z2 | Z3 | Cylindres 1, 2 et 3 |
| A intérieure | 140 - 155 | 150 - 165 | 150 - 165 | 150 - 165 | 155 - 165 | 155 - 165 | 155 - 165 | 155 - 165 | 10 - 30 |
| B centrale | 140 | 150 - 165 | 150 - 165 | 150 - 165 | | | | | |
| A extérieure | 140 - 155 | 150 - 165 | 150 - 165 | 150 - 165 | | | | | |

**Tableau 6 : Paramètres de procédé de l'extrudeuse, la filière et la ligne de calandrage**

| Extrudeuse | | | |
|---|---|---|---|
| | Vis A (interne) | Vis B (centre) | Vis A (externe) |
| Répartition couches % | 5 | 90 | 5 |
| Vitesse vis (RPM) | 35 | 35 - 40 | 35 |

| Filière | | | |
|---|---|---|---|
| Ouverture des lèvres (mm) | 0.5 | | |

| Calandre | | | |
|---|---|---|---|
| Vitesse de tirage (m/min) | 2 - 4 | | |
| Entrefer cylindres 1 et 2 (mm) | Ouvert | | |
| Entrefer cylindres 2 et 3 (mm) | 0,45 | | |

### VI. Méthode d'analyses

Les propriétés mécaniques des films sont mesurées selon la norme EN ISO 527-3 (Plastiques - Détermination des propriétés en traction - Partie 3 : conditions d'essai pour films et feuilles).

L'évaluation de la biodégradabilité des films a été évaluée avec un test de dépolymérisation effectué selon le protocole suivant : 100mg de chaque échantillon ont été introduit dans un vial plastique contenant 50mL de solution tampon à pH 9,5. La dépolymérisation est lancée en incubant chaque échantillon à 45°C, dans un incubateur agité à 150 RPM. Une aliquote de 1mL de solution tampon est prélevée régulièrement et filtrée à l'aide d'une seringue à filtre de 0.22 µm afin d'être analysée par chromatographie liquide à haute performance (HPLC) avec une colonne Aminex HPX-87H pour mesurer la libération d'acide lactique (AL) et son dimère. Le système de chromatographie utilisé est une Ultimate 3000 UHPLC system (Thermo Fisher Scientific, Inc. Waltham, MA, USA) comprenant une pompe, un échantillonneur automatique, une colonne thermostatée à 50°C et un détecteur d'UV à 220nm. L'éluant est le 5 mM H₂SO₄. L'injection est de 20 µL d'échantillon. L'acide lactique est mesuré à partir de courbes standard préparées à partir d'acide lactique commercial.

L'hydrolyse des films plastique est calculée à partir de l'acide lactique et du dimère d'acide lactique libéré. Le pourcentage de dépolymérisation est calculé en regard du pourcentage de PLA dans l'échantillon.

### Résultats

### VII. Composition des films et résultats

Les films ont été préparés avec les granulés préparés en I et le mix polymère support et d'enzyme préparé en II, du PBAT et du Biolice.Bags 6040T.

La couche centrale B est préparée avec les granulés préparés en I et du polymère support ou avec les granulés préparés en I et avec le mix polymère support et d'enzyme préparé en II.

Les couches externes A sont constituées de PBAT (100%) ou du Biolice.Bags 6040T (100%).

Pour les films, les épaisseurs relatives de chaque couche A/B/A sont de 20%/60%/20%.

Les compositions de ces différents films sont répertoriées dans le tableau [7] ci-dessous.

**Tableau 7 : Récapitulatif des films multicouches réalisés**

| | Couche A (interne) | Couche B (centre) | Couche A (externe) | Teneur globale en enzyme (%) |
|---|---|---|---|---|
| Répartition couches % | 20 | 60 | 20 | - |
| Film 1 | Biolice.Bags 6040T | Granulés I + polymère support | Biolice.Bags 6040T | 0% |
| Film 2 | Biolice.Bags 6040T | Granulés I + mix II | Biolice.Bags 6040T | 0,134% |
| Film 3 | PBAT | Granulés I + polymère support | PBAT | 0% |
| Film 4 | PBAT | Granulés I + mix II | PBAT | 0,114% |

Les films 1 et 3 servent de références de l'état de la technique pour les films respectivement 2 et 4 de l'invention.

La présence du mix n'a pas d'impact sur le process d'extrusion gonflage. Les paramètres process restent identiques entre les films de la technique et de l'invention.

Les propriétés mécaniques ainsi mesurées montrent que les films décrits dans l'invention ont des propriétés mécaniques maintenues et conformes au domaine. Les résultats sont présentés dans le tableau [8].

**Tableau 8 : Caractérisation des propriétés mécaniques des films**

| Film | | 1 | 2 | 3 | 4 |
|---|---|---|---|---|---|
| ep (µm) | | 13,4 | 13,4 | 9,2 | 9,2 |

| Propriété | Sens de mesure | | | | |
|---|---|---|---|---|---|
| Contrainte à la rupture (%) | SL | 100% ± 6,6 | 95,5 ± 14,4 | 100% ± 15,8 | 136,2% ± 16,7 |
| | ST | 100% ± 17,8 | 104,8 ± 15,6 | 100% ± 6,1 | 98,8% ± 17,7 |
| Allongement à la rupture (%) | SL | 100% ± 12,3 | 89,4% ± 23,5 | 100% ± 10,7 | 207,3% ± 36 |
| | ST | 100% ± 6,1 | 70,6% ± 14,1 | 100% ± 21,6 | 143% ± 65,9 |
| Module Young (%) | SL | 100% ± 15,7 | 114,1 ± 11,2 | 100% ± 29,4 | 177,5% ± 20,1 |
| | ST | 100% ± 35,8 | 103,3 ± 12,4 | 100% ± 23,6 | 137,4% ± 10,1 |
| Résistance à la déchirure (%) | SL | 100% ± 9,4 | 95% ± 4,2 | 100% ± 30,8 | 74,4% ± 26,2 |
| | ST | 100% ± 6,8 | 83,8% ± 9,8 | 100% ± 7,2 | 103,4% ± 19,9 |

| | | | | | |
|---|---|---|---|---|---|
| (avec SL = Sens long du film et ST = Sens transversal du film) | | | | | |

L'évaluation de la biodégradabilité des films a été réalisée selon la méthode décrite en V.

Les films 1 et 3 qui ne contiennent pas le mix polymère support et d'enzyme présentent un taux de dépolymérisation nul.

Les films 2 et 4 selon l'invention présentent respectivement des taux de dépolymérisation 6,7% et 8,4% après 9 jours.

### VIII. Composition des feuilles et résultats

Les feuilles ont été préparées avec du PLA, du Biolice.Bags 6040T, du Mater-Bi et le mix préparé en II.

La couche centrale B est préparée avec le PLA ou Mater-Bi et du polymère support ou, avec le PLA ou Mater-Bi et le mix préparé en II.

Les couches externes A sont constituées de PLA (100%) ou du Biolice.Bags 6040T (100%) ou du Mater-Bi (100%).

Pour les films, les épaisseurs relatives de chaque couche A/B/A sont de 5%/90%/5%.

Les compositions de ces différentes feuilles sont répertoriées dans le tableau [9] ci-dessous.

**Tableau 9 : Récapitulatif des feuilles multicouches réalisées**

| | Couche A (interne) | Couche B (centre) | Couche A (externe) | Teneur globale en enzyme (%) |
|---|---|---|---|---|
| Répartition couches % | 5 | 90 | 5 | - |
| Feuille 1 | PLA | PLA + polymère support | PLA | 0% |
| Feuille 2 | PLA | PLA + mix Il | PLA | 0,397% |
| Feuille 3 | Biolice.Bags 6040T | PLA + polymère support | Biolice.Bags 6040T | 0% |
| Feuille 4 | Biolice.Bags 6040T | PLA + mix Il | Biolice.Bags 6040T | 0,397% |
| Feuille 5 | Mater-Bi | Mater-Bi + polymère support | Mater-Bi | 0% |
| Feuille 6 | Mater-Bi | Mater-Bi+ mix Il | Mater-Bi | 0,397% |
| Feuille 7 | Biolice.Bags 6040T | Mater-Bi + polymère support | Biolice.Bags 6040T | 0% |
| Feuille 8 | Biolice.Bags 6040T | Mater-Bi+ mix Il | Biolice.Bags 6040T | 0,397% |

La présence du mix n'a pas d'impact sur le process. Les paramètres process restent identiques entre les feuilles de la technique ou de l'invention.

## Revendications

1. Article thermoplastique multicouches biodégradable de type ABA, ABCA ou ACBCA, **caractérisé en ce que** la couche centrale B comprend au moins 0,001% d'enzymes capables de dégrader les polymères des couches A qui l'encadrent, le pourcentage étant donné en poids par rapport au poids total de la composition de la couche B.

2. Article multicouche selon la revendication 1, **caractérisé en ce que** la couche A comprend des polyesters choisis parmi le PBAT (polybutylene adipate terephthalate), le PHA (polyhydroxyalkanoate), le PHB (Poly-β-hydroxybutyrate), le PHH (Polyhydroxyhexanoate), le PBS (polybutylène succinate), le PLA (acide polylactique), le PCL (polycaprolactone), le PBSA (polybutylène succinate adipate), l'amidon plastifié et leurs mélanges en toutes proportions.

3. Article multicouche selon l'une des revendications 1 ou 2, **caractérisé en ce que** le polyester de la couche A est choisi parmi le PBAT, le PLA et leurs mélanges en toutes proportions.

4. Article multicouche selon l'une des revendications 1 à 3, **caractérisé en ce que** la composition de la couche B comprend au moins 0,002% d'enzyme, plus avantageusement au moins 0,05%.

5. Article multicouche selon l'une des revendications 1 à 4, **caractérisé en ce que** les polymères constitutifs de la couche B sont choisis parmi les polyesters ou des matériaux barrière comme le PVOH (alcool polyvinylique), le PVCD (polychlorure de vinyle), le PGA (acide polyglycolique), la cellulose, les protéines de lait, ou des polysaccharides et leurs mélanges en toutes proportions.

6. Article multicouche selon l'une des revendications 1 à 5, **caractérisé en ce que** la couche B comprend un polymère support des enzymes ayant une température de fusion inférieure à 140°C et/ou une température de transition vitreuse inférieure à 70°C et un polysaccharide.

7. Article multicouche selon l'une des revendications 1 à 6, **caractérisé en ce qu'**il comprend au moins une couche C dont la composition comprend des matériaux barrière aux gaz choisis parmi le PVOH (alcool polyvinylique), le PVCD (polychlorure de vinyle), le PGA (acide polyglycolique), la cellulose, les protéines de lait, ou des polysaccharides et leurs mélanges en toutes proportions.

8. Article multicouche selon l'une des revendications 1 à 7, **caractérisé en ce qu'**il est coextrudé.

9. Article multicouche selon l'une des revendications 1 à 8, **caractérisé en ce qu'**il a une épaisseur inférieure à 250µm, préférentiellement inférieure à 100µm, 50µm, 40µm ou 30µm, plus préférentiellement de 10 à 20µm.

10. Article multicouche selon l'une des revendications 1 à 8, **caractérisé en ce qu'**il a une épaisseur supérieure à 150µm, préférentiellement inférieure à 5000µm, plus préférentiellement de 250 à 3000µm.

11. Film, **caractérisé en ce qu'**il comprend un article multicouche selon la revendication 9.

12. Utilisation d'un matériel multicouche selon la revendication 10 pour la préparation d'un gobelet, une assiette, une capsule de boisson, une barquette ou un blister d'emballage.

## Patentansprüche

1. Biologisch abbaubarer thermoplastischer Mehrschichtartikel vom Typ ABA, ABCA oder ACBCA, **dadurch gekennzeichnet, dass** die mittlere Schicht B mindestens 0,001 % an Enzymen umfasst, die imstande sind, die Polymere der Schichten A, die sie einrahmen, abzubauen, wobei der Prozentsatz in Gewicht in Bezug auf das Gesamtgewicht der Zusammensetzung der Schicht B angegeben ist.

2. Mehrschichtartikel nach Anspruch 1, **dadurch gekennzeichnet, dass** die Schicht A Polyester umfasst, die aus PBAT (Polybutylenadipat-teterephthalat), PHA (Polyhydroxyalkanoat), PHB (Poly-β-hydroxybutyrat), PHH (Polyhydroxyhexanoat), PBS (Polybutylensuccinat), PLA (Polymilchsäure), PCL (Polycaprolacton), PBSA (Polybutylensuccinatadipat), weichgemachter Stärke und deren Gemischen in allen Proportionen ausgewählt sind.

3. Mehrschichtartikel nach einem der Ansprüche 1 oder 2, **dadurch gekennzeichnet, dass** Polyester der Schicht A aus PBAT, PLA und deren Gemischen in allen Proportionen ausgewählt ist.

4. Mehrschichtartikel nach einem der Ansprüche 1 bis 3, **dadurch gekennzeichnet, dass** die Zusammensetzung der Schicht B mindestens 0,002 % an Enzym, vorteilhafter mindestens 0,05 % umfasst.

5. Mehrschichtartikel nach einem der Ansprüche 1 bis 4, **dadurch gekennzeichnet, dass** die Polymere, aus denen sich die Schicht B zusammensetzt, aus den Polyestern oder Sperrschichtmaterialien, wie PVOH (Polyvinylalkohol), PVCD (Vinylpolychlorid), PGA (Polyglykolsäure), Zellulose, Milchproteinen, oder Polysacchariden und deren Gemischen in allen Proportionen ausgewählt sind.

6. Mehrschichtartikel nach einem der Ansprüche 1 bis 5, **dadurch gekennzeichnet, dass** die Schicht B ein Trägerpolymer der Enzyme, welches eine Schmelztemperatur von weniger als 140 °C und/oder eine Glasübergangstemperatur von weniger als 70 °C aufweist, und ein Polysaccharid umfasst.

7. Mehrschichtartikel nach einem der Ansprüche 1 bis 6, **dadurch gekennzeichnet, dass** er mindestens eine Schicht C umfasst, deren Zusammensetzung Gas-Sperrschichtmaterialien umfasst, die aus PVOH (Polyvinylalkohol), PVCD (Vinylpolychlorid), PGA (Polyglykolsäure), Zellulose, Milchproteinen, oder Polysacchariden und deren Gemischen in allen Proportionen ausgewählt sind.

8. Mehrschichtartikel nach einem der Ansprüche 1 bis 7, **dadurch gekennzeichnet, dass** er koextrudiert ist.

9. Mehrschichtartikel nach einem der Ansprüche 1 bis 8, **dadurch gekennzeichnet, dass** er eine Dicke von weniger als 250 µm, vorzugsweise weniger als 100 µm, 50 µm, 40 µm oder 30 µm, bevorzugter von 10 bis 20 µm aufweist.

10. Mehrschichtartikel nach einem der Ansprüche 1 bis 8, **dadurch gekennzeichnet, dass** er eine Dicke von mehr als 150 µm, vorzugsweise weniger als 5000 µm, bevorzugter von 250 bis 3000 µm aufweist.

11. Film, **dadurch gekennzeichnet, dass** er einen Mehrschichtartikel nach Anspruch 9 umfasst.

12. Verwendung eines Mehrschichtmaterials nach Anspruch 10 für die Herstellung eines Bechers, eines Tellers, einer Getränkekapsel, einer Schale oder eines Verpackungsblisters.

## Claims

1. An ABA, ABCA or ACBCA type biodegradable multilayer thermoplastic article, **characterized in that** the central layer B comprises at least 0.001% of enzymes capable of degrading the polymers of the layers A which surround it, the percentage being given by weight based on the total weight of the composition of layer B.

2. The multilayer article according to claim 1, **characterized in that** layer A comprises polyesters selected from PBAT (polybutylene adipate terephthalate), PHA (polyhydroxyalkanoate), PHB (poly-β-hydroxybutyrate), PHH (polyhydroxyhexanoate), PBS (polybutylene succinate), PLA (polylactic acid), PCL (polycaprolactone), PBSA (polybutylene succinate adipate), plasticized starch and mixtures thereof in any proportions.

3. The multilayer article according to one of claims 1 or 2, **characterized in that** the polyester of layer A is selected from PBAT, PLA and mixtures thereof in any proportions.

4. The multilayer article according to one of claims 1 to 3, **characterized in that** the composition of layer B comprises at least 0.002% of enzyme, more advantageously at least 0.05%.

5. The multilayer article according to one of claims 1 to 4, **characterized in that** the constituent polymers of layer B are selected from polyesters or barrier materials such as PVOH (polyvinyl alcohol), PVCD (polyvinyl chloride), PGA (polyglycolic acid), cellulose, milk proteins, or polysaccharides and mixtures thereof in any proportions.

6. The multilayer article according to one of claims 1 to 5, **characterized in that** layer B comprises an enzyme carrier polymer having a melting temperature below 140°C and/or a glass transition temperature below 70°C and a polysaccharide.

7. The multilayer article according to one of claims 1 to 6, **characterized in that** it comprises at least one layer C whose composition comprises gas barrier materials selected from PVOH (polyvinyl alcohol), PVCD (polyvinyl chloride), PGA (polyglycolic acid), cellulose, milk proteins, or polysaccharides and mixtures thereof in any proportions.

8. The multilayer article according to one of claims 1 to 7, **characterized in that** it is coextruded.

9. The multilayer article according to one of claims 1 to 8, **characterized in that** it has a thickness of less than 250 µm, preferentially less than 100 µm, 50 µm, 40 µm or 30 µm, more preferentially from 10 to 20 µm.

10. The multilayer article according to one of claims 1 to 8, **characterized in that** it has a thickness greater than 150 µm, preferentially less than 5000 µm, more preferentially from 250 to 3000 µm.

11. A film, **characterized in that** it comprises a multilayer article according to claim 9.

12. Use of a multilayer material according to claim 10 for the preparation of a cup, a plate, a beverage capsule, a tray or a blister pack.
